# EUROPÄISCHE PATENTSCHRIFT

(11) **EP 2 465 405 B1**
(45) Veröffentlichungstag und Bekanntmachung des Hinweises auf die Patenterteilung: **21.06.2017**
(21) Anmeldenummer: 12001965.8
(22) Anmeldetag: 20.03.2012
(51) Int. Cl.: A47L 15/42

(54) **Geschirrspüler mit Wärmespeichertank**
Dishwasher with hot water tank
Lave-vaisselle doté d'un accumulateur thermique

(43) Veröffentlichungstag der Anmeldung: 20.06.2012
(73) Patentinhaber: V-Zug AG, CH-6301 Zug (CH)
(72) Erfinder: Loichinger, Albert Johann, 8135 Langnau am Albis (CH); Dober, Ernst, 6036 Dierikon (CH); Bon, Patrick, 8810 Horgen (CH)
(74) Vertreter: Sutter, Kurt

(56) Entgegenhaltungen:
- EP-A2- 1 864 603
- EP-A2- 2 206 824
- WO-A2-2010/079026
- DE-A1- 4 446 731

## Beschreibung

### Gebiet der Erfindung

Die Erfindung betrifft einen Geschirrspüler mit einem Bottich zur Aufnahme von Spülgut, einem Prozesswasserkreislauf, um das Spülgut mit Prozesswasser zu beaufschlagen, einem Tank zur Aufnahme von Wärmespeicherwasser und einer Wärmepumpe, mit welcher Wärme vom Tank an das Prozesswasser transferiert werden kann.

### Hintergrund

Ein Geschirrspüler dieser Art ist in EP 2 206 824 beschrieben. Dort dient die Wärmepumpe dazu, die Energieeffizienz des Geräts zu verbessern. Insbesondere ist ein Tank vorgesehen, der Wasser speichert. Die Wärmepumpe ist dazu ausgestaltet, dem Tank Wärme zu entziehen und diese dem Prozesswasser zuzuführen.

Beim Tank handelt es sich um einen geschlossenen Tank in dem Sinne, dass er nicht Wasser mit dem Bottich austauschen kann. Um den Tank zu füllen und zu leeren, werden manuelle Arbeitschritte vorgeschlagen.

In EP 1 864 603 A2 ist ein Geschirrspüler mit Wärmerückgewinnung beschrieben, der einen Wärmetauscher im Soletank aufweist. Der Tank wird durch eine Zufuhrleitung gefüllt.

In DE 44 46 731 A1 wird ein Geschirrspüler mit einer an eine Frischwasserzuleitung angeschlossenen Wasserenthärtungseinrichtung beschrieben, wobei im Wasserleitungsweg ein programmgesteuertes Magnetventil angeordnet ist.

### Darstellung der Erfindung

Es stellt sich die Aufgabe, bei einem Gerät dieser Art Wasser für den Tank zur Verfügung zu stellen.

Diese Aufgabe wird vom Geschirrspüler gemäss Anspruch 1 gelöst. Demgemäss besitzt das Gerät in an sich bekannter Weise einen Ionentauscher, oder eine andere Art Entkalkungsvorrichtung, zum Entkalken des Prozesswassers, einen Salzspeicher zum Regenerieren des Ionentauschers sowie einen Regenerierwasserspeicher, von welchem dem Salzspeicher eine vorgegebene Menge Frischwasser zugeführt werden kann. Der Regenerierwasserspeicher ist dazu ausgestaltet, nach dem Befüllen Wasser bis zu einem Rückhaltepegel zurückzuhalten. Weiter ist nun eine Verbindungsleitung zwischen dem Regenerierwasserspeicher und dem Tank vorgesehen. Auf diese Weise kann der Tank in einfacher Weise mit Frischwasser versorgt werden.

Vorteilhaft besitzt der Geschirrspüler weiter einen Wasserverteilraum, der in einem unteren Bereich den Regenerierwasserspeicher bildet. Weiter weist der Geschirrspüler ein Frischwasserventil und einen Wasserniveausensor auf, um den Wasserverteilraum höchstens bis zu einem Auffüllpegel oberhalb des Rückhaltepegels aufzufüllen.

Vorzugsweise verläuft die Verbindungsleitung zwischen dem Regenerierwasserspeicher und dem Tank so, dass sie bei gefülltem Regenerierwasserspeicher mit Wasser gefüllt ist.

Weiter besitzt der Tank vorzugsweise eine Entlüftungsleitung, welche in eine Entlüftungsöffnung oberhalb des Auffüllpegels mündet.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein Blockdiagramm eines Geschirrspülers,
Fig. 2 das Prinzip der Wasserversorgung des Tanks und
Fig. 3 eine konkrete Ausführung eines Dosiergeräts.

### Wege zur Ausführung der Erfindung

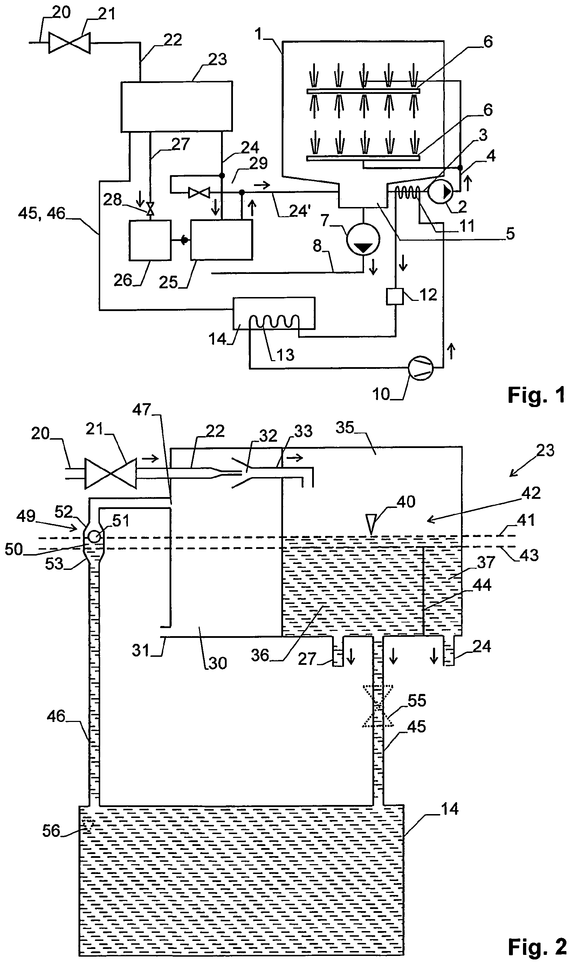

Der Geschirrspüler gemäss Fig. 1 besitzt einen Bottich 1 zur Aufnahme des Spülguts. Am Bottich 1 ist ein Prozesswasserkreislauf mit einer Zirkulationspumpe 2 und Zirkulationsleitungen 3, 4 vorgesehen, über welche Prozesswasser aus dem Sumpf 5 zu den Sprüharmen 6 gefördert wird. Weiter ist am Sumpf 5 eine Ablaufpumpe 7 angeordnet, über welche nicht mehr benötigtes Abwasser über eine Abwasserleitung 8 abgepumpt werden kann.

Wie in EP 2 206 824 beschrieben, besitzt das Gerät weiter eine Wärmepumpe umfassend einen Kompressor 10, einen Kondensator 11, ein Expansionsventil (oder eine Kapillare) 12 sowie einen Verdampfer 13. Mit dem Verdampfer 13 wird einem Tank 14 Wärme entzogen und über den Kondensator 11 dem Prozesswasser zugeführt. Der Tank 14 enthält Wärmespeicherwasser, welches von der Wärmepumpe abgekühlt wird, vorzugsweise derart, dass es zumindest teilweise vereist, so dass auch die latente Wärme des Wärmespeicherwassers genutzt werden kann. Um das Wärmespeicherwasser wieder zu erwärmen, ist dieses in thermischem Kontakt mit der Umgebung. Zusätzlich kann es optional über einen Wärmetauscher mit der Abwasserleitung 8 gekoppelt sein.

Die Funktionsweise der Wärmepumpe und des Tanks 14 ist in EP 2 206 824 im Abschnitt "Geschirrspüler" beschrieben und braucht hier nicht weiter wiederholt zu werden.

Das Wärmespeicherwasser verbleibt über längere Zeit im Tank 14, vorzugsweise über eine sehr grosse Zahl von Waschzyklen, da jeder Wechsel des Wärmespeicherwassers zur Bildung zusätzlicher Ablagerungen im Tank 14 führen würde. In der vorliegenden Lösung wird aber darauf verzichtet, den Tank 14 hermetisch abzuschliessen, da dies bei Verwendung preisgünstiger Materialien (insbesondere Kunststoff) gar nicht vollständig möglich wäre, weil geringe Wassermengen durch die Tankwände diffundieren würden. Zudem scheiden sich Gasanteile ab, und es kommt zu Volumenänderungen durch das Abkühlen und das Einfrieren, was einen hermetischen Abschluss des Tanks 14 erschwert.

Vielmehr wird der Tank 14 in der vorliegenden Lösung gelüftet, d.h. er ist direkt oder über den Bottich 1 mit der Umgebung verbunden. Der Wasserverlust durch Verdunstung oder Wanddiffusion wird mit einem Nachfüllmechanismus kompensiert. Die hierzu getroffenen Massnahmen machen weitgehend Gebrauch von üblichen Komponenten, die in konventionellen Geschirrspülern vorhanden sind, so dass der konstruktive Aufwand gering bleibt. Hierzu soll im Folgenden zunächst die Wasserversorgung des Geräts genauer betrachtet werden.

Die Wasserversorgung umfasst eine Frischwasserzufuhr 20 mit einem Frischwasserventil 21 mit Filter. Das Frischwasser läuft sodann über eine Zuleitung 22 in ein Dosiergerät 23, das sich z.B. an der Rückwand des Bottichs 1 befindet. Das Dosiergerät enthält eine Luftstrecke 32 als Trennung zwischen Frischwassersystem und Prozesswasser. Von diesem Dosiergerät läuft das als Prozesswasser vorgesehene Wasser über eine Leitung 24, einen Ionentauscher 25 und eine Leitung 24' in den Bottich 1 bzw. den Sumpf 5. Zum Regenerieren des Ionentauschers 25 ist in bekannter Weise ein Salzspeicher 26 vorgesehen, der über eine Leitung 27 und ein Ventil 28 vom Dosiergerät 23 Wasser beziehen kann. Weiter ist ein Ventil 29 vorgesehen, über welches Wasser aus dem Dosiergerät unter Umgehung des Ionentauschers 25 in den Bottich 1 oder Sumpf 5 geführt werden kann - dies erlaubt es, die Wasserhärte des Prozesswassers durch Mischen von entkalktem und nicht entkalktem Wasser einzustellen.

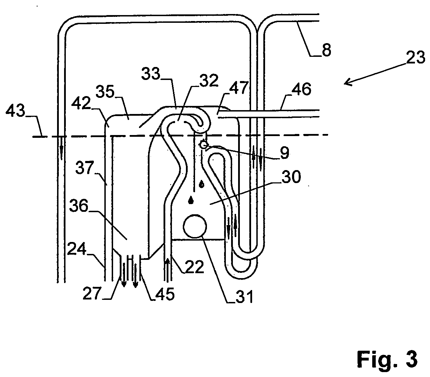

Der Aufbau des Dosiergeräts 23 ist in Fig. 2 und 3 genauer dargestellt. Sie besitzt eine normalerweise luftgefüllte Vorkammer 30, welche über eine Öffnung 31 an ihrem unteren Ende mit der Rückwand des Bottichs 1 kommuniziert. In dieser Vorkammer 30 ist eine Luftstrecke 32 vorgesehen, durch welche das Frischwasser von der Zuleitung 22 gespritzt wird. Das Frischwasser wird sodann in einem Rohrabschnitt 33 aufgefangen. Die Luftstrecke 32 dient in bekannter Weise dazu, den Geschirrspüler vom Leitungsdruck abzukoppeln und, bei Unterdruck in der Frischwasserzufuhr 20, ein Rücksaugen von Prozesswasser zu verhindern.

Das Frischwasser gelangt über den Rohrabschnitt 33 in einen Wasserverteilraum 35. Dieser bildet in seinem unteren Bereich einen Regenerierwasserspeicher 36 sowie eine Prozesswasserzufuhrleitung 37. Der Regenerierwasserspeicher 36 ist über die Leitung 27 und das Ventil 28 mit dem Salzspeicher 26 verbunden. Die Prozesswasserzufuhrleitung 37 ist mit der Leitung 24 verbunden, über welche frisches Prozesswasser via Ionentauscher 25 und Leitung 24' zum Bottich 1 geführt wird.

In oder an dem Dosiergerät 23 kann weiter ein Wasserniveausensor 40 vorgesehen sein. Dieser dient zusammen mit dem Frischwasserventil 21 dazu sicherzustellen, dass während der Zufuhr von Frischwasser ein Auffüllpegel 41 in dem Dosiergerät 23 nicht überschritten wird. Der Wasserniveausensor 40 kann entfallen, wenn das Wasser durch Leitung 27 ausreichend schnell abfliesst.

Die Prozesswasserzufuhrleitung 37 und der Regenerierwasserspeicher 36 kommunizieren über einen Überlaufkanal 42, der in der gezeigten Ausführung vom oberen Bereich des Dosiergeräts 23 gebildet wird. Der Überlaufkanal 42 liegt mindestens teilweise unterhalb des Auffüllpegels 41, so dass sowohl der Regenerierwasserspeicher 36 als auch die Prozesswasserzufuhrleitung 37 mit Wasser versorgt werden.

Das Dosiergerät 23 ist so ausgestaltet, dass bei einem Absinken des Wasserniveaus nach Abschalten der Frischwasserzufuhr eine vorgegebne Menge von Frischwasser im Regenerierwasserspeicher 36 zurückbehalten werden kann. Hierzu ist eine Wand 44 zwischen der Prozesswasserzufuhrleitung 37 und dem Regenerierwasserspeicher 36 vorgesehen, welche eine Wasserscheide auf Höhe eines Rückhaltepegels 43 im Überlaufkanal 42 bildet. Die im Regenerierwasserspeicher 36 zurückbehaltene Wassermenge, welche bis zum Rückhaltepegel 43 reicht, ist so bemessen, dass sie dem Wasserbedarf für einen Regenerierzyklus entspricht.

Soweit sind die Komponenten des Dosiergeräts 23 dem Fachmann grundsätzlich bekannt.

Wie ersichtlich, ist nun der Tank 14 über eine Verbindungsleitung 45 mit dem Regenerierwasserspeicher 36 verbunden. Sie mündet am Boden oder zumindest unterhalb des Rückhaltepegels 43 in den Regenerierwasserspeicher 36 und führt dann nach unten zum Tank 14, so dass sie bei gefülltem Regenerierwasserspeicher 36 mit Wasser gefüllt ist. Der Tank 14 ist vollständig unterhalb des Regenerierwasserspeichers 36 angeordnet, so dass er selbst beim Entleeren des Regenerierwasserspeichers 36 mit Wasser gefüllt bleibt.

Weiter ist der Tank 14 mit einer Entlüftungsleitung 46 verbunden, die in einer Entlüftungsöffnung 47 oberhalb des Auffüllpegels 41 mündet. Die Entlüftungsöffnung 47 ist in der Vorkammer 30 angeordnet und kommuniziert über die Öffnung 31 mit dem Bottich 1 oder alternativ über die Abwasserleitung 8 und der Umgebung.

In der Entlüftungsleitung 46 ist ein Überlaufverschluss 49 angeordnet, der die Entlüftungsleitung 46 schliesst, wenn das Wasser in derselben über den Auffüllpegel 41 ansteigt. Der Überlaufverschluss 49 wird eingesetzt, um zu verhindern, dass bei Überdruck im Wasserverteilraum 35 und somit im Regenerierwasserspeicher 36 Wasser durch den Tank 14 in die Vorkammer 30 gedrückt und so der Wasseraustausch im Tank 14 erhöht wird. Ein Überdruck dieser Art kann zumindest zeitweise entstehen, wenn Frischwasser über den Rohrabschnitt 33 in den Wasserverteilraum 35 eingespritzt wird.

Der Überlaufverschluss 49, der also die Aufgabe hat, ein mindestens teilweises Durchspülen des Tanks 14 zu verhindern, besitzt auf der Höhe des Auffüllpegels 41 eine Schwimmerkammer 50, deren Durchmesser den Durchmesser der Entlüftungsleitung 46 übersteigt. In der Schwimmerkammer 50 ist ein Schwimmer 51 angeordnet, der normalerweise auf dem Wasser schwimmt. Sein Durchmesser ist ebenfalls grösser als derjenige der Entlüftungsleitung 46, aber kleiner als der Durchmesser der Schwimmerkammer 50. Steigt das Wasser in der Schwimmerkammer 50 über einen vorgegebenen Pegel an, so schlägt der Schwimmer 51 an einen Ventilsitz 52 an, der vom oberen Ende der Schwimmerkammer 50 gebildet wird, und verschliesst so die Entlüftungsleitung 46. Sinkt das Wasserniveau bis unterhalb der Schwimmerkammer 50, so schlägt der Schwimmer 51 an einem unteren Ende 53 der Schwimmerkammer 50 an.

Fig. 3 zeigt eine konkrete Ausführung eines Dosiergeräts 23, wie es z.B. an der Rückseite des Bottichs 1 angeordnet sein kann. Die Vorkammer 30 ist hier rechts in der Figur ersichtlich, und die Öffnung 31, mit der sie mit dem Bottich 1 kommuniziert, erstreckt sich senkrecht zur Zeichenebene.

Der Zulauf 22 tritt von unten in die Vorkammer 30 ein und die Luftstrecke 32 wird von einem einseitig offenen Abschnitt zwischen dem Zulauf 22 und dem Rohrabschnitt 33 gebildet.

Der Wasserverteilraum 35 ist links der Vorkammer 30 dargestellt und bildet in seinem rechten Teil den Regeneierwasserspeicher 36 und in seinem linken Teil die Prozesswasserzufuhrleitung 37.

Weiter ist aus Fig. 3 ersichtlich, dass auch die Abwasserleitung 8 durch die Vorkammer 30 geführt wird, wo sie über ein Rückschlagventil 9 gelüftet ist.

Die vorliegende Anordnung, von welcher oben einige Ausführungsbeispiele beschrieben sind, erlaubt es, den Tank 14 mit einfachen Mitteln gefüllt zu halten, und insbesondere Verdunstungsverluste zu kompensieren, wobei aber der Wasserdurchsatz durch den Tank 14 minimal bleibt, da lediglich Verdunstungs- und Diffusionsverluste ausgeglichen werden müssen.

Messungen zeigen, dass typische Verdunstungsverluste in einem Schlauch pro Jahr im Bereich von z.B. 1.5 Litern liegen. Unter der Annahme von 100 mg/l gelösten Salzen im Wasser führt dies nach 17 Jahren zu Ablagerungen von höchstens 2.5 Gramm. Diese geringe Menge führt nicht zu einer Beeinträchtigung der Kapazität des Latent-Wärmespeichers 14.

Mit dem vorliegenden System kann der Tank 14 bei Geräteinbetriebnahme automatisch gefüllt werden. Hierzu wird das Frischwasserventil 21 während einer vorgegebenen Zeit geöffnet. Dadurch wird der Tank 14 über die Leitung 45 gefüllt. Für den Fall, dass gleichzeitig Wasser über die Prozesswasserzufuhrleitung 37 in den Bottich 1 fliesst, wird auch die Abwasserpumpe 7 in Betrieb gehalten. Nach Ablauf einer vorgegebenen Zeit kann das Frischwasserventil 21 geschlossen werden. Denkbar ist auch eine Erstbefüllung durch ein impulsweises Füllen, damit nicht unnötig die Ablaufpumpe Frischwasser abführen muss.

In den soweit beschriebenen Ausführungen, ist die Verbindungsleitung 46 dauernd offen. Alternativ kann in ihr auch ein Ventil 55 vorgesehen sein, wie es in Fig. 2 gestrichelt dargestellt ist. Mit einem solchen Ventil kann der Wasserfluss zwischen Regenerierwasserspeicher 36 und Tank 4 wahlweise ein- oder ausgeschaltet werden.

Weiter kann im Tank 14 oder an der Leitung 46 auch ein Füllstandssensor 56 vorgesehen sein, der in Fig. 2 ebenfalls gestrichelt angedeutet ist. In diesem Fall kann die Steuerung des Geräts so ausgestaltet werden, dass mit dem Ventil 55 die Wassermenge im Tank 14 so gesteuert wird, dass das Wasser das Niveau des Füllstandssensors 56 nicht übersteigt, so dass sich der Überlaufverschluss 49 erübrigt.

Ist der Füllstandssensor 56 im Tank 14 angeordnet, so kann sichergestellt werden, dass im Tank 14 eine Luftblase bleibt, die ein Ausgleichsvolumen bildet, wenn das Wasser im Tank 14 teilweise gefriert und so sein Volumen ändert.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Geschirrspüler mit
einem Bottich (1) zur Aufnahme von Spülgut,
einem Prozesswasserkreislauf (2, 3, 4), um das Spülgut mit Prozesswasser zu beaufschlagen,
einem Tank (14) zur Aufnahme von Wärmespeicherwasser und
einer Wärmepumpe (10 - 13), mit welcher Wärme vom Tank (14) an das Prozesswasser transferierbar ist,
**gekennzeichnet durch**
eine Entkalkungsvorrichtung (25) zum Entkalken des Prozesswassers,
einen Salzspeicher (26) zum Regenerieren der Entkalkungsvorrichtung (25),
einen Regenerierwasserspeicher (36), welcher dazu ausgestaltet ist, nach einer Befüllung Wasser bis zu einem Rückhaltepegel (43) zurückzuhalten und von welchem dem Salzspeicher (26) eine vorgegebene Menge Frischwasser zuführbar ist und
eine Verbindungsleitung (45) zwischen dem Regenerierwasserspeicher (36) und dem Tank (14)zum Versorgen des Tanks (14) mit Frischwasser.

2. Geschirrspüler nach Anspruch 1 umfassend einen Wasserverteilraum (35), der in einem unteren Bereich den Regenerierwasserspeicher (36) bildet, wobei der Geschirrspüler weiter ein Frischwasserventil (21) und einen Wasserniveausensor (40) aufweist, um den Wasserverteilraum (35) bis höchstens zu einem Auffüllpegel (41) oberhalb des Rückhaltepegels (43) aufzufüllen.

3. Geschirrspüler nach Anspruch 2, wobei der Tank (14) mit einer Entlüftungsleitung (46) verbunden, die in eine Entlüftungsöffnung (47) oberhalb des Auffüllpegels (41) mündet.

4. Geschirrspüler nach Anspruch 3, wobei die Entlüftungsöffnung (47) mit dem Bottich (1) kommuniziert.

5. Geschirrspüler nach einem der Ansprüche 3 bis 4, wobei in der Entlüftungsleitung (46) ein Überlaufverschluss (49) angeordnet ist, der ein mindestens teilweises Durchspülen des Tanks (14) bei Überdruck im Regenerierwasserspeicher (36) verhindert.

6. Geschirrspüler nach Anspruch 5, wobei der Überlaufverschluss (49) die Entlüftungsleitung (46) schliesst, wenn das Wasser in der Entlüftungsleitung (46) über einen vorgegebenen Pegel, insbesondere den Auffüllpegel (41), ansteigt.

7. Geschirrspüler nach einem der Ansprüche 5 oder 6, wobei der Überlaufverschluss (49) einen Schwimmer (51) aufweist, der beim Ansteigen des Wassers an einen Ventilsitz (52) anschlägt und so die Entlüftungsleitung verschliesst.

8. Geschirrspüler nach einem Ansprüche 2 bis 7, welcher weiter eine Prozesswasserzufuhrleitung (37) aufweist, über welche dem Bottich (1) Frischwasser zuführbar ist, wobei die Prozesswasserzufuhrleitung (37) und der Regenerierwasserspeicher (36) über einen Überlaufkanal (42) kommunizieren, der mindestens teilweise unterhalb des Auffüllpegels (41) liegt.

9. Geschirrspüler nach Anspruch 8, wobei der Überlaufkanal (42) eine Wasserscheide auf Höhe des Rückhaltepegels (43) bildet.

10. Geschirrspüler nach einem der vorangehenden Ansprüche, wobei der Regenerierwasserspeicher (36) gelüftet ist.

11. Geschirrspüler nach einem der vorangehenden Ansprüche, wobei der Tank (14) vollständig unterhalb des Regenerierwasserspeichers (36) angeordnet ist.

12. Geschirrspüler nach einem der vorangehenden Ansprüche, wobei die Verbindungsleitung (45) zwischen dem Regenerierwasserspeicher (36) und dem Tank (14) so verläuft, dass sie bei gefülltem Regenerierwasserspeicher (36) mit Wasser gefüllt ist

13. Geschirrspüler nach einem der vorangehenden Ansprüche, wobei in der Verbindungsleitung (46) ein Ventil (55) angeordnet ist.

14. Geschirrspüler nach einem der vorangehenden Ansprüche, wobei im Tank (14) ein Füllstandssensor (56) angeordnet ist.

## Claims

1. Dishwasher with
a vat (1) for receiving dishes,
a process water circuit (2, 3, 4) for providing process water to the dishes,
a tank (14) for receiving heat accumulator water and
a heat pump (10 - 13), by means of which heat is transferred from the tank (14) to the process water,
**characterized by**
a decalcification device (25) for decalcifying the process water,
a salt accumulator (26) for regenerating the decalcification device (25),
a regeneration water accumulator (36), which is adapted to retain water up to a retaining level (43) after a filling and from which a predefined quantity of fresh water is supplied to the salt accumulator (26) and
a connection pipe (45) between the regeneration water accumulator (36) and the tank (14) for supplying fresh water to the tank (14).

2. Dishwasher according to claim 1, comprising a water distribution chamber (35), which forms the regeneration water accumulator (36) in a bottom area, wherein the dishwasher further has a fresh water valve (21) and a water level sensor (40) in order to fill the water distribution chamber (35) up to at most a filling level (41) above the retaining level (43).

3. Dishwasher according to claim 2, wherein the tank (14) is connected to a venting pipe (46) which opens into a venting opening (47) above the filling level (41).

4. Dishwasher according to claim 3, wherein the venting opening (47) communicates with the vat (1).

5. Dishwasher according to one of the claims 3 to 4, wherein an overflow closure (49) is arranged in the venting pipe (46), which prevents an at least partial rinsing of the tank (14) in case of overpressure in the regeneration water accumulator (36).

6. Dishwasher according to claim 5, wherein the overflow closure (49) closes the venting pipe (46) when the water in the venting pipe (46) rises over a predefined level, particularly the filling level (41).

7. Dishwasher according to one of the claims 5 or 6, wherein the overflow closure (49) has a floater (51) which abuts at a valve seat (52) while the water rises and in this way closes the venting pipe.

8. Dishwasher according to one of the claims 2 to 7, which further has a process water supply pipe (37), via which fresh water is supplied to the vat (1), wherein the process water supply pipe (37) and the regeneration water accumulator (36) communicate via an overflow channel (42) which is located at least partly below the filling level (41).

9. Dishwasher according to claim 8, wherein the overflow channel (42) forms a watershed at the level of the retaining level (43).

10. Dishwasher according to one of the preceding claims, wherein the regeneration water accumulator (36) is aerated.

11. Dishwasher according to one of the preceding claims, wherein the tank (14) is arranged entirely below the regeneration water accumulator (36).

12. Dishwasher according to one of the preceding claims, wherein the connecting pipe (45) runs between the regeneration water accumulator (36) and the tank (14) in such a way that it is filled with water when the regeneration water accumulator (36) is filled with water.

13. Dishwasher according to one of the preceding claims, wherein a valve (55) is arranged in the connecting pipe (46).

14. Dishwasher according to one of the preceding claims, wherein a filling level sensor (56) is arranged in the tank (14).

## Revendications

1. Lave-vaisselle comprenant
une cuve (1) pour recevoir la vaisselle,
un circuit d'eau de processus (2, 3, 4) pour alimenter d'eau de processus à la vaisselle,
un récipient (14) pour recevoir d'eau d'accumulateur de chaleur et
une pompe de chaleur (10 - 13), à l'aide de laquelle de l'eau est transférée du récipient (14) à l'eau de processus,
**caractérisé par**
un dispositif de décalcification (25) pour décalcifier l'eau de processus,
un accumulateur de sel (26) pour régénérer le dispositif de décalcification (25),
un accumulateur d'eau de régénération (36) adapté à retenir de l'eau jusqu'à un niveau de retenue (43) après un remplissage et duquel un quantité prédéfinie d'eau fraîche est alimentée à l'accumulateur de sel (26) et
un tuyau de connexion (45) entre l'accumulateur d'eau de régénération (36) et le récipient (14) pour alimenter d'eau fraîche dans le récipient (14).

2. Lave-vaisselle selon la revendication 1, comprenant une chambre de distribution d'eau (35) qui forme l'accumulateur d'eau de régénération (36) dans une région di fond, le lave-vaisselle ayant en outre une soupape d'eau fraîche (21) et un capteur de niveau d'eau (40) afin de remplir la chambre de distribution d'eau (35) jusqu'au maximum un niveau de remplissage (41) au-dessus du niveau de retenue (43).

3. Lave-vaisselle selon la revendication 2, le récipient (14) étant connecté avec un tuyau d'aération (46) qui s'ouvre dans une ouverture d'aération (47) au-dessus du niveau de remplissage (41).

4. Lave-vaisselle selon la revendication 3, l'ouverture d'aération (47) communiquant avec la cuve (1).

5. Lave-vaisselle selon l'une des revendications 3 à 4, une fermeture de débordement (49) étant arrangée dans le tuyau d'aération (46), qui empêche un rinçage au moins partiel du récipient (14) en cas d'une surpression dans l'accumulateur d'eau de régénération (36).

6. Lave-vaisselle selon la revendication 5, la fermeture de débordement (49) fermant le tuyau d'aération (46) quand l'eau dans le tuyau d'aération (46) monte jusqu'à un niveau prédéfini, particulièrement le niveau de remplissage (41).

7. Lave-vaisselle selon l'une des revendications 5 ou 6, la fermeture de débordement (49) ayant un flotteur (51) qui aboutit à un siège de soupape (52) lorsque l'eau monte et par cela ferme le tuyau d'aération.

8. Lave-vaisselle selon l'une des revendications 2 à 7, ayant en outre un tuyau d'alimentation d'eau de processus (37), par lequel de l'eau fraîche est alimentée à la cuve (1), le tuyau d'alimentation d'eau de processus (37) et l'accumulateur d'eau de régénération (36) communiquant par un canal de débordement (42) situé au moins partiellement au-dessous du niveau de remplissage (41).

9. Lave-vaisselle selon la revendication 8, le canal de débordement (42) formant un point tournant d'eau au niveau du niveau de retenue (43).

10. Lave-vaisselle selon l'une des revendications précédentes, l'accumulateur d'eau de régénération (36) étant aéré.

11. Lave-vaisselle selon l'une des revendications précédentes, le récipient (14) étant arrangé entièrement au-dessous de l'accumulateur d'eau de régénération (36).

12. Lave-vaisselle selon l'une des revendications précédentes, le tuyau de connexion (45) s'étendant entre l'accumulateur d'eau de régénération (36) et le récipient (14) de sorte qu'il est rempli avec de l'eau quand l'accumulateur d'eau de régénération (36) est rempli avec de l'eau.

13. Lave-vaisselle selon l'une des revendications précédentes, une soupape (55) étant arrangée dans le tuyau de connexion (46).

14. Lave-vaisselle selon l'une des revendications précédentes, un capteur de niveau de remplissage (56) étant arrangé dans le récipient (14).
